(19)

Europäisches
Patentamt
European
Patent Office
Office européen
des brevets

(11) **EP 3 099 078 A1**

(12) **EUROPEAN PATENT APPLICATION**

(43) Date of publication:
**30.11.2016 Bulletin 2016/48**

(21) Application number: **15305823.5**

(22) Date of filing: **29.05.2015**

(51) Int Cl.:
*H04N 21/258* (2011.01)    *H04N 21/6587* (2011.01)
*H04N 21/81* (2011.01)     *H04N 21/234* (2011.01)
*H04N 5/225* (2006.01)     *H04N 21/442* (2011.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **BLONDE, Laurent**
  **35576 CESSON SEVIGNE (FR)**
• **SCHUBERT, Arno**
  **35576 CESSON SEVIGNE (FR)**
• **GENDROT, Remi**
  **35576 CESSON SEVIGNE (FR)**

(74) Representative: **Huchet, Anne**
**TECHNICOLOR**
**1-5, rue Jeanne d'Arc**
**92130 Issy-les-Moulineaux (FR)**

(54) **METHOD FOR COLLECTING INFORMATION ON USERS OF 4D LIGHT FIELD DATA, CORRESPONDING APPARATUSES AND COMPUTER PROGRAMS**

(57)    A method for collecting information on users of light field data comprises:
- receiving Light Field viewing parameters (19) used for determining images (18) visualized by a user from light field data (14), along with an identifier of the user;
- storing the Light Field viewing parameters (19), along with an identifier of the light field data (14), in a user profile associated to the user's identifier.

The light field data may be analyzed as a function of the Light Field viewing parameters (19) and of a light field acquisition device model, in order to identify objects in focus or objects not in focus in the visualized image. Identified objects are stored as objects of interest or of non-interest in the users' profile.

Fig. 1

EP 3 099 078 A1

**Description**

**1. Technical Field**

The present disclosure relates to light-field imaging, and to technologies of image and/or video rendering in the context of light field data. More precisely, the present disclosure generally relates to a method and an apparatus for collecting information on users of light field data, and identifies applications in the domain of image or video rendering, as well as in the domain of user profiling.

2. Background

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admission of prior art.

Conventional image capture devices project a three-dimensional scene onto a two-dimensional sensor. During operation, a conventional capture device captures a two-dimensional (2-D) image of the scene representing an amount of light that reaches a photosensor (or photodetector) within the device. However, this 2-D image contains no information about the directional distribution of the light rays that reach the photosensor (this distribution may be referred to as the light-field). Direction of incoming light, for example, is lost during such 2D acquisition and information like depth cannot be recovered for a single system. Thus, a conventional capture device does not store most of the information about the light distribution from the scene.

Light-field capture devices (also referred to as "light-field data acquisition devices") have been designed to measure a four-dimensional (4D) light-field of the scene by capturing the light directions from different viewpoints of that scene. Thus, by measuring the amount of light traveling along each beam of light that intersects the photosensor, these devices can capture additional optical information (information about the directional distribution of the bundle of light rays) for providing new imaging applications by post-processing. The information acquired/obtained by a light-field capture device is referred to as the light-field data.

In the state of the art, there are several ways to represent (or define) 4D light-field data. Indeed, in the Chapter 3.3 of the PhD dissertation thesis entitled "Digital Light Field Photography" by Ren Ng, published in July 2006, three different ways to represent 4D light-field data are described. Firstly, 4D light-field data can be represented, when recorded by a plenoptic camera by a collection of micro-lens images (also named microimages in the state of the art). 4D light-field data in this representation are named raw images (or raw 4D light-field data). Secondly, 4D light-field data can be represented, by a set of sub-aperture images. A sub-aperture image corresponds to a captured image of a scene from a point of view, the point of view being slightly different between two sub-aperture images. These sub-aperture images give information about the parallax and depth of the imaged scene. Thirdly, 4D light-field data can be represented by a set of epipolar images (see for example the article entitled : "Generating EPI Representation of a 4D Light Fields with a Single Lens Focused Plenoptic Camera", by S. Wanner et al., published in the conference proceedings of ISVC 2011).

In the present disclosure, the terms "light field data" and "4D light field data" are considered as having the same scope and meaning.

Light-field capture devices are defined herein as any devices that are capable of capturing light-field data. There are several types of light-field capture devices, among which:

- plenoptic devices, which use a microlens array placed between the image sensor and the main lens, as described in document US 2013/0222633;

- a camera array.

The light field data may also be simulated with Computer Generated Imagery (CGI), or from a series of 2-D images of a scene each taken from a different viewpoint by the use of a conventional handheld camera.

Light-field data processing comprises notably, but is not limited to, generating refocused images of a scene, generating perspective views of a scene, generating depth maps of a scene, generating extended depth of field (EDOF) images, generating stereoscopic images, and/or any combination of these.

Hence, among others, a 4D Light-Field (4DLF) allows computing various refocused images with adjustable depth-of-field, focalization distances and viewing positions/directions. It thus offers interesting possibilities, as it could allow a user to visualize a personalized view (according to a given point of view, a user dependent depth blur...) from the multiple directions and depth of field images that can be computed from a light field based acquisition system.

Some academic works, such as Marc Levoy in "Light fields and computational imaging" IEEE Computer 39, no. 8 (2006): 46-55, and Ng Ren, et al. in "Light field photography with a hand-held plenoptic camera" Computer Science Technical Report CSTR 2, no. 11 (2005), have focused on re-focalization, or on changing viewpoint direction from a light field image.

Some camera manufacturers such as Lytro® or Raytrix® also offer solutions for personalizing the image displayed to the user.

According to these techniques, content refocusing is based on interaction between the user and the display. It may be offered by means of mouse pointing or by touching a tactile screen. For example, the user may point to an object in the scene, and the image displayed to the user will, in turn, show the selected object in focus.

More sophisticated techniques rely on Inertial Measurement Units (IMU) embedded in handheld display devices, or on camera image analysis to generate refocusing parameters corresponding to the user's expectations.

Moreover, nowadays, web site providers, broadcasters of movies or TV programs are very interested in gathering information about users, in order to determine user profiles. Such user profiles allow identifying user preferences, such as their favorite car type or brand, or the kind of home decoration items they look for, etc. They also help determining which kind of TV program is most adapted for a given category of users.

It would be desirable to provide a technique that would allow improving user profiling over the prior art, while taking advantage of the technical specificities of light field data processing, such as user personalized content refocusing.

## 3. Summary

In one embodiment of the present disclosure, a method for collecting information on users of light field data is disclosed, which comprises:

- receiving at least one Light Field viewing parameter used for determining an image visualized by a user from light field data, along with an identifier of said user;
- storing said at least one Light Field viewing parameter, along with an identifier of said light field data, in a user profile associated to said user's identifier.

Actually, in a visualized image or content, there may be persons or objects, which the user is particularly interested in. He/she will hence naturally refocus the image to set these objects or persons sharp, and have them in focus on the image. Light Field viewing parameters used for determining the visualized 2D image from the 4D light field data are hence very relevant for identifying regions of interest for a given user in a scene.

Moreover, Light Field viewing parameters may help define some user's aesthetic preferences, as regards a type of blur effect, or a quality of image for example.

Embodiments of the present disclosure thus rely on a novel and inventive approach, according to which Light Field viewing parameters set by the user for determining a 2D image from a 4D light field are received and stored in a user profile, in association with an identifier of the user (a name, an ID number, ...).

Such a user profile takes great advantage of the technical specificities of light field processing, which allow refocusing content or selecting a given viewpoint or depth blur.

Such a method may be implemented by a content provider, or by a dedicated user profiling service.

According to an embodiment of the present disclosure, such a method also comprises analyzing said light field data as a function of said at least one Light Field viewing parameter and of a light field acquisition device model, and determining at least one object in focus and/or at least one object not in focus in said visualized image as a result of said analyzing.

Hence, the user's Light Field viewing parameters are stored, correlated with the viewed content and analyzed to determine objects or persons to which/whom the user focused his/her attention. It will allow, for example, determining the user is particularly interested in a specific type of car, or a specific actor. On the contrary, analyzing objects, which are not in focus, may provide as well relevant information about the user.

According to a further embodiment of the present disclosure, such a method also comprises storing an identifier of said at least one object in focus in said user profile.

Thus, it is possible to record in the user's profile that the user is particularly interested in a given type of object or in a given person, as objects or people set in focus by users reflect their interest more accurately than other prior techniques like text typing, mouse clicking or even gaze tracking.

According to yet a further embodiment, such a method also comprises gathering in a category profile at least two user profiles showing at least one similarity criteria.

User categories can be easily inferred analyzing common Light Field viewing parameters accumulated over time in the user profiles, or common objects of interest or of disinterest recorded in the user profiles. Such category profiles may be exploited for commercial offers or to optimize user experience in digital applications. They may be used as well for anonymization.

According to yet a further embodiment, the image is part of a video, and said at least one Light Field viewing parameter is a time dependent parameter.

According to embodiments of the present disclosure, the Light Field viewing parameters belong to the group comprising:

- a viewpoint parameter;
- a refocusing parameter;
- a field of view parameter;
- a visual effect parameter;
- a depth of field parameter.

In a further embodiment of the present disclosure, a method for providing information on a user of light field data is provided, which comprises receiving light field data and determining at least one image from said light field data, as a function of at least one Light Field viewing parameter. Such a method also comprises sending said at least one Light Field viewing parameter along with an identifier of said user to at least one collecting device.

Hence, the present disclosure relies on a novel and inventive approach of user profiling in the context of light field data. Actually, a content is provided to the user with means to refocus and watch images extracted from light field data. Light Field viewing parameters are used to generate such images from light field data, and sent, or uploaded, to a collecting device of a profiling service, which may be set up by the content provider.

According to another embodiment, said at least one Light Field viewing parameter results of user interaction with at least one device used for visualizing said image, or used to manipulate a visualized image. Such an interaction may consist in touching a tactile screen or moving around a handheld device such as a tablet for example. The Light Field viewing parameter is hence representative of the user's intents.

According to a further embodiment, said at least one image is part of a video and said at least one Light Field viewing parameter is a time dependent parameter. The present disclosure thus finds interesting applications in the field of TV program or movie broadcasting.

According to yet a further embodiment, said at least one Light Field viewing parameter is sent along with a light field acquisition device model or with an identifier of said light field acquisition device model.

Such a light field acquisition device model allows defining how to use the Light Field viewing parameters, which are camera dependent parameters, in order to identify which objects are set in focus by the user. Light field acquisition device models may have been prerecorded in a database used by the profiling service, such that an identifier of the model is enough for gaining access to the appropriate model in the database.

According to embodiments of the present disclosure, the Light Field viewing parameters belong to the group comprising:

- a viewpoint parameter;
- a refocusing parameter;
- a field of view parameter;
- a visual effect parameter;
- a depth of field parameter.

The present disclosure also concerns an apparatus for collecting information on users of light field data, which comprises:

- a receiving unit for receiving at least one Light Field viewing parameter used for determining an image visualized by a user from light field data, along with an identifier of said user;
- a storage unit for storing said at least one Light Field viewing parameter, along with an identifier of said light field data, in a user profile associated to said user's identifier.

Both units may be embedded on the same processor.

The present disclosure also concerns a display device for displaying at least one image determined from light field data, as a function of at least one Light Field viewing parameter, which comprises a sending unit for sending said at least one Light Field viewing parameter along with an identifier of said user to at least one collecting device.

The present disclosure also concerns a home network device connected to at least one display device for displaying at least one image determined from light field data, as a function of at least one Light Field viewing parameter, which comprises:

- a receiving module for receiving said at least one Light Field viewing parameter from said at least one display device;
- a sending module for sending said received Light Field viewing parameter along with an identifier of said user to at least one collecting device.

Both modules may be embedded on the same processor.

The present disclosure also concerns a computer program product downloadable from a communication network and/or recorded on a medium readable by a computer and/or executable by a processor, comprising program code instructions for implementing a method for collecting information on users of light field data as described above.

The present disclosure also concerns a non-transitory computer-readable medium comprising a computer program product recorded thereon and capable of being run by a processor, including program code instructions for implementing a method for collecting information on users of light field data as described above.

The present disclosure also concerns a computer program product downloadable from a communication network and/or recorded on a medium readable by a computer and/or executable by a processor, comprising program code instructions for implementing a method for providing information on a user of light field data as described previously.

The present disclosure also concerns a non-transitory computer-readable medium comprising a computer program product recorded thereon and capable of being run by a processor, including program code instructions for implementing a method for providing information on a user of light field data as described previously.

Such computer programs may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read--only memory (ROM); an erasable programmable read--only memory (EPROM or Flash memory); a portable compact disc read--only memory (CD-ROM); an optical storage device; a magnetic storage device; or any suitable combination of the foregoing.

It is to be understood that both the foregoing general description and the following detailed description are exemplary and explanatory and are not restrictive of the invention, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

**4. Brief description of the drawings**

The invention can be better understood with reference to the following description and drawings, given by way of example and not limiting the scope of protection, and in which:

- **Figure 1** depicts a system for collecting information on users of light field data according to an embodiment of the present disclosure;
- **Figure 2** depicts an example of Light Field viewing parameters used for rendering images acquired by a light-field capture device;
- **Figure 3** shows an example of a Light Field viewing parameter when the light field data are acquired by a simple camera pair;
- **Figure 4** is a schematic block diagram illustrating an example of an apparatus for collecting information on users of light field data according to an embodiment of the present disclosure;
- **Figure 5** is a flow chart for explaining a process for collecting information on users of light field data according to an embodiment of the present disclosure;
- **Figure 6** is a schematic block diagram illustrating an example of a display device allowing providing information on a user of light field data according to an embodiment of the present disclosure;
- **Figure 7** is a schematic block diagram illustrating an example of a home network device allowing providing information on a user of light field data according to an embodiment of the present disclosure;
- **Figure 8** is a flow chart for explaining a process for providing information on a user of light field data according to an embodiment of the present disclosure;
- **Figure 9** schematically illustrates a scene with objects of interest, and the way the focal stack of images could be adapted to such a scene, according to embodiments of the present disclosure;
- **Figure 10** is a diagram illustrating an example of a focal stack of images, which has been adapted to the scene of **figure 9.**

The components in the figures are not necessarily to scale, emphasis instead being placed upon illustrating the principles of the invention.

## 5. Detailed description

The general principle of the present disclosure relies on collecting and using Light Field viewing parameters used by users to determine images or videos from light field data, in order to set up user profiles. Such Light Field viewing parameters may comprise viewpoint parameters and/or refocusing parameters and/or field of view parameters and/or visual effect parameters and/or depth of field parameters.

In the foregoing, we describe an exemplary embodiment in the context of a home network. Of course, this is not limitative of the scope of application of the present disclosure, but is given as a mere illustrative example.

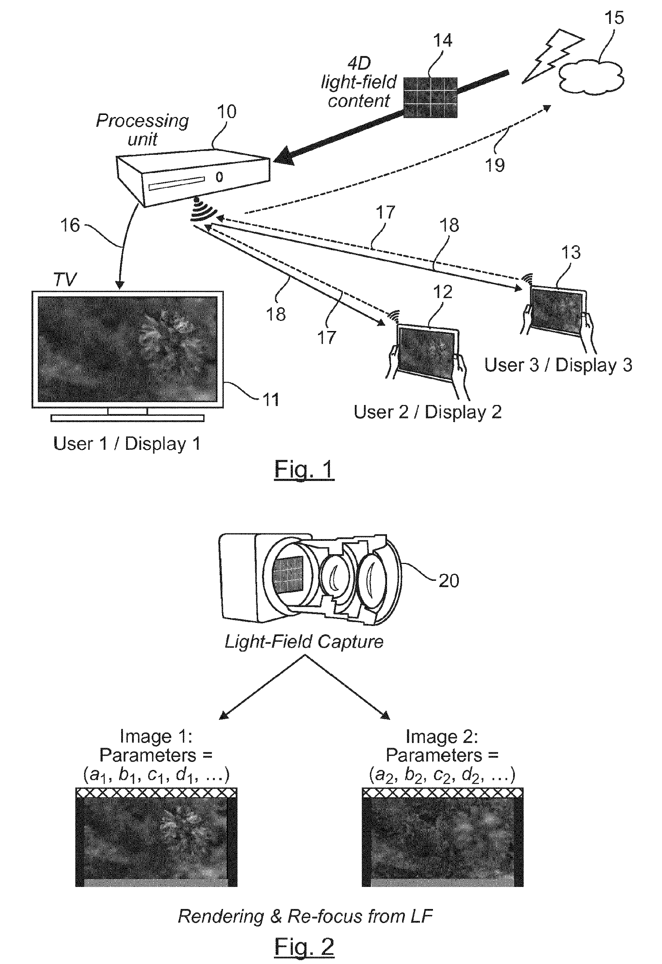

**Figure 1** illustrates a home network comprising a processing unit 10, such as a set top box, and several display devices, such as a TV 11, a first tablet 12 and a second tablet 13. The display devices 11-13 and the set top box 10 are connected through a wired and/or wireless interface. For example, the TV set 11 is connected to the set top box 10 by cable, while tablets 12 and 13 are connected to the set top box 10 through a WiFi® connection. The home network of **figure 1** could of course comprise any other kind of display device (a smartphone for example, or a laptop computer), without departing from the scope of the present disclosure.

A movie or a TV program is acquired in the form of simultaneous points of views, either from a set of cameras images, or a set of micro-images in a plenoptic camera. It forms a 4D light-field content 14, which is sent to the set top box 10 by a content provider 15. The set top box 10 may receive the 4D light field content 15 through any kind of connection with the content provider 15, such as by satellite, through a FTTx network, ...

The TV set 11 may receive from set top box 10 and display a refocused video with default parameters 16. On the contrary, users of first and second tablets 12 and 13 may be offered the ability to personalize the displayed content, by adapting the Light Field viewing parameters of the 4D light field content, such that the displayed movie is refocused according to the user's preferred point of view and/or depth blur for example.

To this purpose, tablets 12 and 13 are for example equipped with sensors, such as IMUs (Inertial Measurement Units), which allow determining the pose (position and orientation) of the tablet with respect to a reference marker. When users move tablets 12, 13, they modify both their position and their orientation. On the tablet's screen, both the focalization distance and the viewpoint of the images change with the tablet's pose.

Tablets 12, 13 are for example equipped with a back camera (not shown), which films the scene in front of the user, and notably a specific marker (for example an AR tag (Augmented Reality tag)) inserted in the scene. The marker is associated with a Pattern Coordinate System. It is possible to locate tablet 12, 13 in space, when the transformation describing the position of the tablet 12, 13 from the pattern coordinate system has been found, since rotation and translation are provided. This of course requires that the equation of the tablet plane be expressed. Such an equation is however not developed in the foregoing, as it is not the purpose of the present disclosure.

Each tablet 12, 13 hence receive from set top box 10 a personalized refocused video 18. Tablets 12, 13 are equipped with sending units (for example a WiFi® transmitter), which allow them sending the specific Light Field viewing parameters 17 they have used to the set top box 10. In an alternate embodiment, tablets 12, 13 only send to the set top box 10 the interaction parameters 17 they have used, in the form of the pose parameters or pose modification parameters of the tablet, while set top box 10 computes the corresponding Light Field viewing parameters therefrom.

Set top box 10 receives the interaction parameters or Light Field viewing parameters 17 from each tablet 12, 13. It is assumed that set top box 10 knows an identifier of the user of each tablet 12, 13, which may have been acquired through any known method or technique. Set top box 10 associates the interaction or Light Field viewing parameters 17 with the user's identifier, and sends them together, as illustrated by arrow 19, to a collecting device of the content provider 15, or of a dedicated profiling service.

**Figure 2** illustrates an example of Light Field viewing parameters used for rendering images acquired by a light-field capture device 20. It is recalled that there are different types of cameras 20 able to capture light field data, such as plenoptic type 1 cameras, plenoptic type 2 cameras and cameras arrays. In association with each camera type, methods exist to refocus the light field data to form an image. Such methods have parameters controlling e.g. the viewpoint, the amount of blur or the distance of the plane in focus to the refocused image.

Depending on the light field camera type, a parameter set ($a, b, c, d, ...$) can be defined to transform/project the light field data into a 2D image for a given instant t. Hence, the same light field data set may allow determining an image 21 with a set of Light Field viewing parameters ($a_1, b_1, c_1, d_1, ...$), and a different image 22 with a different set of parameters ($a_2, b_2, c_2, d_2, ...$).

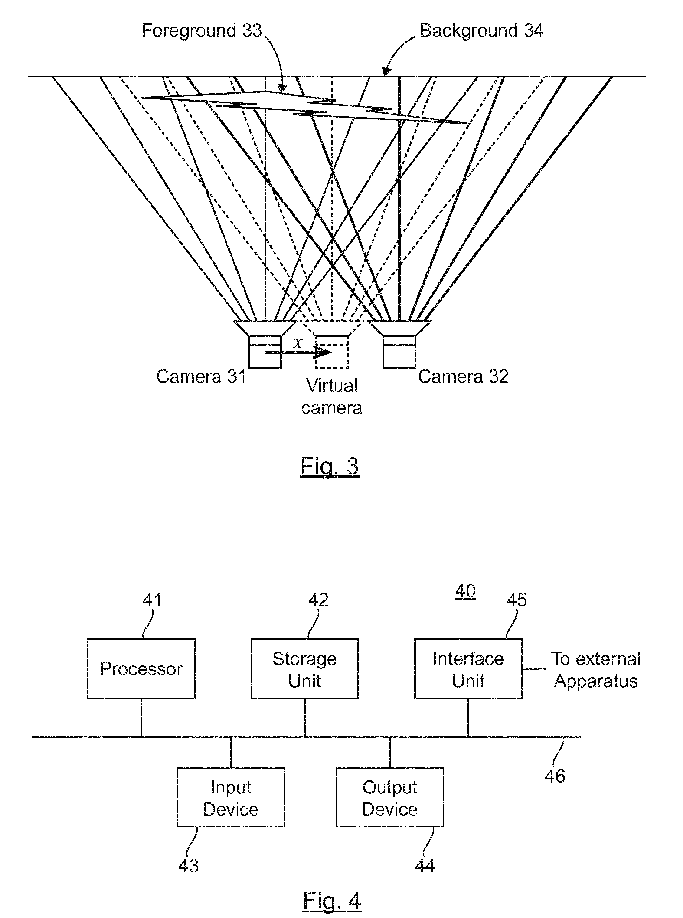

**Figure 3** illustrates an example of Light Field viewing parameters in case of a simple camera pair 31, 32, which acquire the light field data of a scene showing a foreground 33 and a background 34. In such a case, a parameter set can simply be the position x of a virtual camera between camera 31 and camera 32. Such a parameter set only allows a viewpoint change.

Of course, many other parameter sets may be used, depending of the type of light field data acquisition device.

Hence, in case of parallel cameras in an array, the Light Field viewing parameter set can be ($x,y$) the position of a virtual camera relative to a reference position in the array.

In case of cameras with focal axes converging to a central point, Light Field viewing parameters can be spherical coordinates ($\theta, \varphi$) defining a direction for the virtual camera axis relative to a frame centered on the central point.

For the refocusing model explained in "Light field photography with a handheld plenoptic camera." Computer Science Technical Report CSTR 2, no. 11 (2005), by Ng **et al.,** formula (1), which gives the irradiance image value that would have appeared on a synthetic film plane, is used to refocus, with parameters ($s', t'$) being the position of a pixel in the synthetic (virtual) film plane:

$$\bar{E}(s', t') = \frac{1}{D^2} \iint L'(u', v', s', t') A(u', v') cos^4\theta du\, dv \qquad (1),$$

where D is the separation between the film and aperture, A is an aperture function (e.g. one within the opening and zero outside it), and $\theta$ is the angle of incidence that ray ($u', v', s', t'$) makes with the film plane.

Many other refocusing models can be implemented. In the absence of a common format, a light field camera model defining how to exploit camera dependent parameters ($a, b, c, d, ...$ ) can be transferred in advance to a receiving unit of the collecting device and stored, or a reference to a camera model itself stored in a database can be transmitted together with the ($a, b, c, d, ...$ ) parameters for each 2D view to refocus. The parameter set then becomes (**$m, a, b, c, d, ...$** ) where **$m$** is a camera model index and ($a, b, c, d, ...$ ) are **$m$**-dependent parameters.

**Figure 4** shows a schematic block diagram illustrating an example of an apparatus for collecting information on users of light field data according to an embodiment of the present disclosure. Such an apparatus is hosted in a dedicated user profiling service, or by a content provider, which is interested in gathering information about its users' preferences.

An apparatus 40 illustrated in **Figure 4** includes a processor 41, a storage unit 42, an input device 43, an output device 44, and an interface unit 45 which are connected by a bus 46. Of course, constituent elements of the computer apparatus 60 may be connected by a connection other than a bus connection using the bus 46.

The processor 41 controls operations of the apparatus 40. The storage unit 42 stores at least one program to be executed by the processor 41, and various data, including user profiles (comprising Light Field viewing parameters and corresponding 4D light field data, objects or persons of interest for the user...), parameters used by computations performed by the processor 41, intermediate data of computations performed by the processor 41, light field camera models, and so on. The processor 41 may be formed by any known and suitable hardware, or software, or a combination of hardware and software. For example, the processor 41 may be formed by dedicated hardware such as a processing circuit, or by a programmable processing unit such as a CPU (Central Processing Unit) that executes a program stored in a memory thereof.

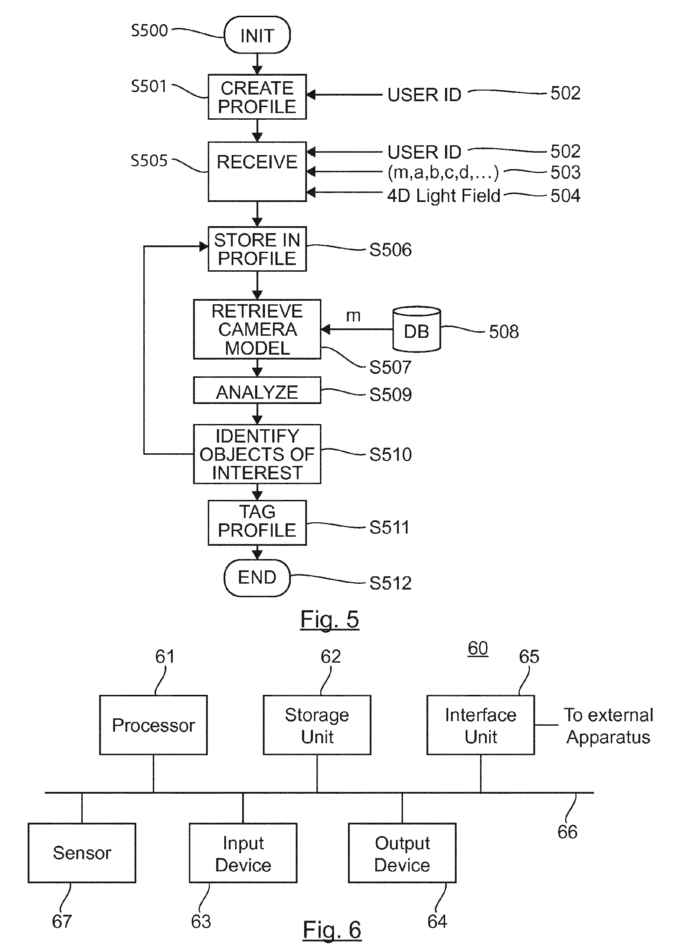

The storage unit 42 may be formed by any suitable storage or means capable of storing the program, data, or the like in a computer-readable manner. Examples of the storage unit 42 include non-transitory computer-readable storage media such as semiconductor memory devices, and magnetic, optical, or magneto-optical recording media loaded into a read and write unit. The program causes the processor 41 to perform a process for collecting information on users of 4D light field data according to an embodiment of the present disclosure as described hereinafter with reference to **Figure 5**.

In an alternate embodiment, storage unit 42 does not store the users' profiles, which are rather stored in an external database (not shown), to which apparatus 40 is connected.

The input device 43 may be formed by a keyboard, a pointing device such as a mouse, or the like for use by the user to input commands, to launch analysis of the information gathered on users, etc. The output device 44 may be formed by a display device to display, for example, a Graphical User Interface (GUI), edited user profiles, results of analysis on users' profiles, etc. The input device 43 and the output device 44 may be formed integrally by a touchscreen panel, for example.

The interface unit 45 provides an interface between the apparatus 40 and an external apparatus. The interface unit 45 may be communicable with the external apparatus via cable or wireless communication. In this embodiment, the external apparatus may be a set top box of a home network. In this case, Light Field viewing parameters and associated users' identifiers can be input from the set top box to the apparatus 40 through the interface unit 45, then stored in the storage unit 42.

Although only one processor 41 is shown on **figure 4**, it must be understood that such a processor may comprise different modules and units embodying the functions carried out by apparatus 40 according to embodiments of the present disclosure, such as:

- a module for analyzing the light field data as a function of the Light Field viewing parameters received from the set top box or directly from the users and as a function of a light field acquisition device model;
- a module for determining the object(s) in focus or not in focus in the visualized image;
- a unit for determining category profiles gathering several user profiles showing similarity criteria (such as same objects of interest in focus in the images).

These modules and units may also be embodied in several processors 41 communicating and co-operating with each other.

**Figure 5** is a flow chart for explaining a process for collecting information on users of 4D light field data according to an embodiment of the present disclosure.

Such a process is run by apparatus 40 of **figure 4**, and may be part of a general profiling service of a content provider or of a dedicated user profiling service, to which content providers may subscribe.

The process initializes at step S500. At step S501, users profiles are created on the basis of users identifiers 502 known or provided by the content provider. Users profiles may be recorded in storage unit 42 or in a dedicated database. Initially users profiles are void of information as regards users' preferences, but may contain information provided by the content provider, such as age, address, nationality, gender, socio-economic background of the user.

Once the user starts watching images (a movie or a TV program for example) and starts interacting with the content so as to get personalized views, the user's device starts sending Light Field viewing parameters, through its set-top box, to the collecting device 40.

Hence, at step S505, the collecting device 40 receives a set of parameters ($m, a, b, c, d, ...$) 503 where $m$ is a camera model index, along with the user identifier 502 and a reference to the 4D light field data 504 the user is watching.

On the illustrative embodiment of **figure 5,** at step S505, only a reference to a camera model $m$, itself stored in a database is transmitted together with the ($a, b, c, d, ...$) parameters for each 2D view to refocus. In an alternate embodiment, not illustrated on **figure 5,** the light field camera model defining how to exploit camera dependent parameters ($a, b, c, d, ...$) is transferred in advance to the receiving unit of the collecting device and stored in storage unit 42, prior to the RECEIVE step S505.

Similarly, the 4D light field data may be received either in the form of a mere reference 504, or in the form of the whole 4D light field data. In the first case, the collecting device 40 may retrieve the 4D light field data from a database or storage unit in which it has been previously recorded.

At step S506, all the received data (i.e. the set of parameters ($m, a, b, c, d, ...$) 503 and a reference to the 4D light field data 504) are stored in the user profile associated with user ID 502.

At this stage, raw profiling data are hence recorded in the user profile. In order to get information on users of 4D light field data, which are easily readable, an analysis of these raw profiling data must be launched.

To this end, at step S507, the camera model $m$ is retrieved from database 508. At step S509, the 4D light field data 504 is analyzed, as a function of camera model $m$ and of the set of Light Field viewing parameters 503 determined by users interaction with his/her display device and received at step S505.

Hence, the ($m, a, b, c, d, ...$) time dependent parameters are correlated with the 4D Light Field movie content. Analyzing the 4D Light Field movie content allows to know which object/person is in focus for each time period. For example:

○ a preprocessing of the 4D light field data identifies the Light Field viewing parameters corresponding to each object/person for each time period in the movie to generate a 'parameters_vs_object/person_in_focus' list;
○ the correlation is done between the Light Field viewing parameters ($m, a, b, c, d, ...$) and the 'parameters_vs_object/person_in_focus' list items;
○ a distance in the refocus parameter space is used to determine the closest objects/person in focus, at step S510.

An identifier of each object/person detected in focus (or not in focus) over time at step S510 is stored/added in the user profile.

The user profile may be tagged at step S511 as belonging to a given category profile, as a function of the objects/persons of interest identified at step S510. For example, if an actress was identified at step S510, and her name was stored in the user profile, the user profile may be tagged at step S511 as belonging to the category of users who are fans of this actress.

Although **figure 5** shows the process ends at step S512, it must be understood that the users' profiles are constantly updated, as a function of the new Light Field viewing parameters uploaded from the user's device, and of the new 4D light field content he/she watches.

User profiles allow knowing more about the preferences of a user, and hence allow providing tailored offers or services.

**Figure 6** shows a schematic block diagram illustrating an example of a display apparatus allowing providing information on a user of light field data according to an embodiment of the present disclosure. Such an apparatus is a device used by a user for watching images or movies determined from 4D light field data, and with which the user interacts in order to get a personalized viewpoint or focus of the scene.

An apparatus 60 illustrated in **Figure 6** includes a processor 61, a storage unit 62, an input device 63, a display device 64, an interface unit 65 and a sensor 67 which are connected by a bus 66. Of course, constituent elements of the computer apparatus 60 may be connected by a connection other than a bus connection using the bus 66. Such an apparatus 60 is for example the tablet 12, 13 of **figure 1,** or any other type of display device, such as a smartphone.

Sensor 67 may be any kind of sensor allowing to detect interaction of the user with apparatus 60, whether such an interaction consists in mouse clicking, screen touching, manipulating device...

The processor 61 controls operations of the apparatus 60. The storage unit 62 stores at least one program to be executed by the processor 61, and various data, including data of 4D light field images captured and provided by a light field camera, parameters used by computations performed by the processor 61, intermediate data of computations performed by the processor 61, information captured by sensor 67, and so on. The storage unit 62 may notably store a focal stack, as provided by a light field capture device. The processor 61 may be formed by any known and suitable hardware, or software, or a combination of hardware and software. For example, the processor 61 may be formed by dedicated hardware such as a processing circuit, or by a programmable processing unit such as a CPU (Central Processing Unit) that executes a program stored in a memory thereof.

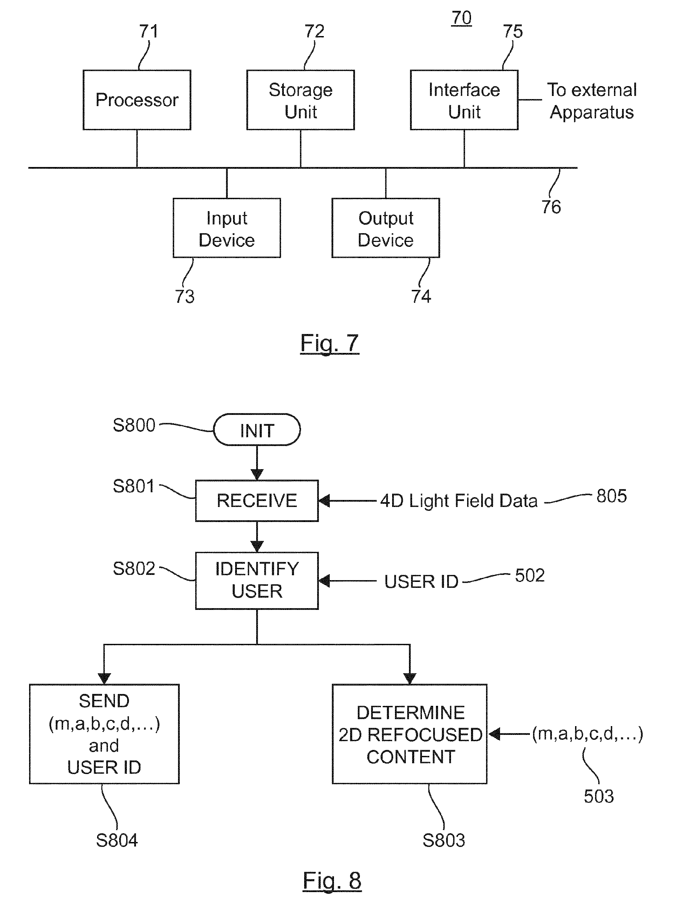

The storage unit 62 may be formed by any suitable storage or means capable of storing the program, data, or the like in a computer-readable manner. Examples of the storage unit 62 include non-transitory computer-readable storage media such as semiconductor memory devices, and magnetic, optical, or magneto-optical recording media loaded into a read and write unit. The program causes the processor 61 to perform a process for providing information on the user of 4D light field data according to an embodiment of the present disclosure as described hereafter with reference to Figure 8. Although it is not part of the present disclosure, the program may also cause the processor 61 to perform a process for displaying a light field image which Light Field viewing parameters are set in accordance with interactions of the user with the apparatus 60, such as, for example, in accordance with pose parameters of the apparatus 60.

The input device 63 may be formed by a keyboard, a pointing device such as a mouse, or the like for use by the user to input commands. The output device 64 may be formed by a display device to display, for example, a Graphical User Interface (GUI), or the light field based image personalized to the user's viewpoint and focus. The input device 63 and the output device 64 may be formed integrally by a touchscreen panel, for example.

The interface unit 65 provides an interface between the apparatus 60 and an external apparatus. The interface unit 65 may be communicable with the external apparatus via cable or wireless communication. In this embodiment, the external apparatus may be a set top box such as set top box 10 in **figure 1**. In this case, data of 4D light field images received by set top box 10 from a content provider can be input from the set top box to the apparatus 60 through the interface unit 65, then stored in the storage unit 62, and displayed on screen 64.

The apparatus 60 and the set top box may communicate with each other via cable or wireless communication.

Although only one processor 61 is shown on **figure 6**, it must be understood that such a processor may comprise different modules and units embodying the functions carried out by apparatus 60 according to embodiments of the present disclosure, such as:

- a module for determining 2D images from the light field data received from the set top box, as a function of Light Field viewing parameters;
- a module for sending the Light Field viewing parameters, along with an identifier of the user to a collecting device of a user profiling service, either directly or through set top box 10.

In a specific embodiment, the module for determining 2D images from the light field data received from the set top box may comprise:

- a module for estimating a pose of the apparatus, on the basis of information provided by sensor 67;
- a module for determining Light Field viewing parameters for the image to be displayed, as a function of the estimated pose of the apparatus;
- a unit for computing the image to be displayed as a slice image of the focal stack, as a function of the Light Field viewing parameters and/or the pose parameters of the apparatus.

These modules and units may also be embodied in several processors 61 communicating and co-operating with each other.

**Figure 7** shows a schematic block diagram illustrating an example of a home network device allowing providing information on a user of light field data according to an embodiment of the present disclosure. Such an apparatus is a device receiving 4D light field content from a content provider and broadcasting this content to display devices in a home network. Such an apparatus is for example set top box 10 of **figure 1**.

An apparatus 70 illustrated in **Figure 7** includes a processor 71, a storage unit 72, an input device 73, an output device 74, and an interface unit 75 which are connected by a bus 76. Of course, constituent elements of the computer apparatus 70 may be connected by a connection other than a bus connection using the bus 76.

The processor 71 controls operations of the apparatus 70. The storage unit 72 stores at least one program to be executed by the processor 71, and various data, including data of 4D light field content provided by a content provider, parameters used by computations performed by the processor 71, intermediate data of computations performed by the processor 71, information received from display devices on the home network, and so on. The processor 71 may be formed by any known and suitable hardware, or software, or a combination of hardware and software. For example, the processor 71 may be formed by dedicated hardware such as a processing circuit, or by a programmable processing unit such as a CPU (Central Processing Unit) that executes a program stored in a memory thereof.

The storage unit 72 may be formed by any suitable storage or means capable of storing the program, data, or the like in a computer-readable manner. Examples of the storage unit 72 include non-transitory computer-readable storage media such as semiconductor memory devices, and magnetic, optical, or magneto-optical recording media loaded into a read and write unit. The program causes the processor 71 to perform a process for providing information on the user of 4D light field data according to an embodiment of the present disclosure as described hereafter with reference to **Figure 8**. Although it is not part of the present disclosure, the program may also cause the processor 71 to perform a process for determining a light field image refocused according to Light Field viewing parameters set in accordance with interactions of the user with a display device in the home network, such as, for example, in accordance with pose parameters of the display device. The program may also cause the processor 71 to perform a process for sending such a refocused content to display device in the home network.

The input device 73 may be formed by a keyboard, a pointing device such as a mouse, or the like for use by the user to input commands. The output device 74 may be formed by a display device to display, for example, a Graphical User Interface (GUI. The input device 73 and the output device 74 may be formed integrally by a touchscreen panel, for example.

The interface unit 75 provides an interface between the apparatus 70 and an external apparatus. The interface unit 75 may be communicable with the external apparatus via cable or wireless communication. In this embodiment, the external apparatus may be a display device such as TV 11 or tablets 12, 13, or equipment 15 of the content provider in **figure 1**. In this case, data of 4D light field images received by home display device 70 from equipment 15 of a content provider can be input from equipment 15 to the apparatus 70 through the interface unit 75, then stored in the storage unit 72.

Although only one processor 71 is shown on **figure 7**, it must be understood that such a processor may comprise different modules and units embodying the functions carried out by apparatus 70 according to embodiments of the present disclosure, such as:

- a receiving module for receiving Light Field viewing parameters and/or interaction parameters from display devices;
- a module for determining 2D images from the light field data received from the content provider, as a function of Light Field viewing parameters determined from interaction parameters of the user with his/her display device;
- a module for sending 2D images focused according to the Light Field viewing parameters to the user's display device;
- a module for sending the Light Field viewing parameters, along with an identifier of the user to a collecting device of a user profiling service.

In a specific embodiment, the module for determining 2D images from the light field data received from the content provider may comprise:

- a module for receiving user's interaction parameters from the user's display device, such as for example pose parameters of the user's display device;
- a module for determining Light Field viewing parameters for the image to be displayed, as a function of the received interaction parameters;
- a unit for computing the image to be displayed as a slice image of the focal stack, as a function of the Light Field viewing parameters and/or the user's interaction parameters.

These modules and units may also be embodied in several processors 71 communicating and co-operating with each other.

**Figure 8** is a flow chart for explaining a process for providing information on a user of 4D light field data according to an embodiment of the present disclosure.

Such a process is run by apparatus 60 of **figure 6,** or by apparatus 70 of **figure 7,** and initializes at step S800.

At step S801, apparatus 60 or 70 receives 4D light field data 805 from a content provider. At step S802, it identifies the user, by any known technique in the art, which will not be described here in further detail. It thus obtains the user ID 502.

Light Field viewing parameters (*m, a, b, c, d, ...* ) 503 are used at step S803 to determine 2D refocused video content from 4D light field data 805, according to a method which will not be described here in further detail.

Simultaneously, Light Field viewing parameters (*m, a, b, c, d, ...*) 503 are uploaded, along with user identifier 502, to a collecting device of a profiling service, such as apparatus 40 of **figure 4.**

As Light Field viewing parameters (*m, a, b, c, d, ...* ) 503 are time-dependent, such a process is run permanently, as long as the user is watching a content determined from 4D light field data.

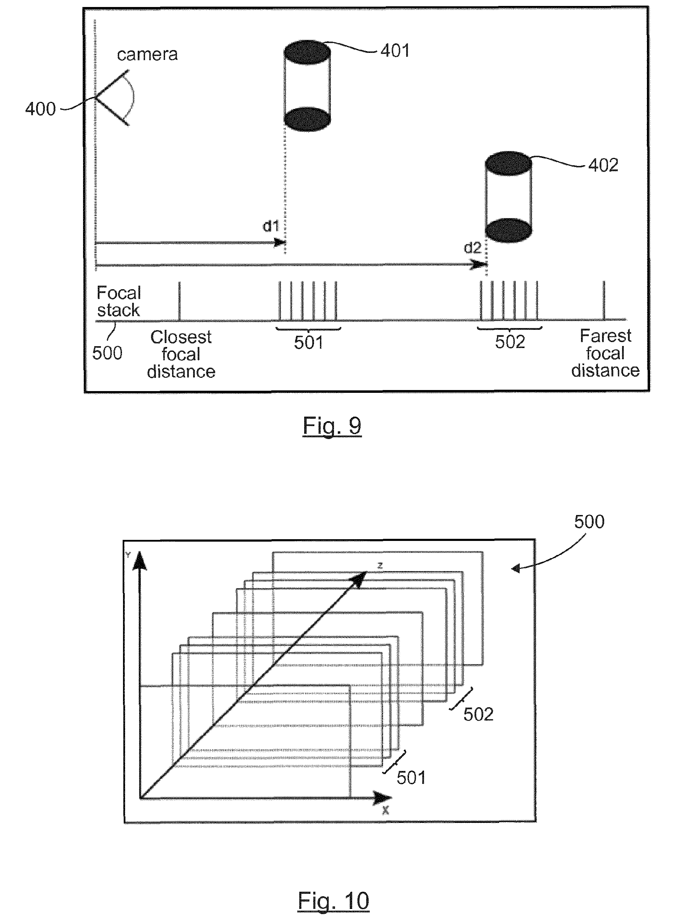

**Figures 9 and 10** illustrate a specific embodiment of the present disclosure, according to which the refocusing of the images according to Light Field viewing parameters determined by users' interactions on the display device is improved, thanks to adaptation of the focal stack of 4D light field data according to the layout of the scene.

We recall that a focal stack is a collection of $N$ images $R_n$ (with $n \in [1, N]$) focused at different planes, which define a cube of images, where N is a user selected number of images. Hence, the distance or distance interval (on the z axis) between two consecutive images in the focal stack corresponds to the distance between two focal planes linked to these two consecutive images.

**Figure 9** shows an example of a scene captured by a camera 400. Such a scene comprises two objects of interest 401 and 402. Object of interest 401 is located at a distance d1 from camera 400, while the other object of interest 402 is located at a distance d2 from camera 400.

When object of interest 401 or 402 is detected in the scene, its position (distance d1 or d2) is known or estimated, so focus value can be computed. It is then also possible to compute close focus values for this position. This is illustrated in **figure 10**, where, at distances d1 and d2, more images are computed for the focal stack. Focal stack 500 hence comprises a focused image corresponding to the closest focal distance, a focused image corresponding to the furthest focal distance, and in-between, two sets of focused images:

- a first group 501 of focused images associated to object of interest 401;
- a second group 502 of focused images associated to object of interest 402.

The computing of images located between objects of interest and the other planes (background or foreground for example) can be linearly driven by depth.

In a variant, the distance between two consecutive images (also named a step) in the focal stack is defined by default as being small (two consecutive images being associated with focal planes spaced each other from around 20 cm in the scene space). Then, a user can decide to select a zone which he/she is not interested in (for example objects positioned in the background), and a focal stack is determined by taking into account the fact that the objects in the background are not important (therefore, the distance between these images is increased compared to the default value in the determined focal stack).

**Figure 10** illustrates the focal stack 500, which has been built with an irregular sampling in z adapted to the scene.

The number of focused images in the set 501 or 502 associated to object of interest 401 or 402 depends on the depth of the object of interest, where the depth corresponds to the distance from the front to the back of the object of interest (the front of the object corresponding to the part of the object which is the closest to the camera, and the back of the object corresponding to the part of the object which is the furthest from the camera). The deeper the object of interest, the more images in the corresponding set of focused images in the focal stack, allowing a finer rendering of the object of interest in an All In Focus image (AIF image), or better refocusing capabilities of the scene.

Actually, thanks to the embodiment of **figures 9 and 10**, more "in-focus regions" are attached to objects of interest. An AIF image corresponds to a focused image in which all objects appear in-focus, and is composed by focus fusion. For objects of interest, the quality of the DoF (Depth of Field) will hence increase in the AIF image.

Moreover, the number of slices of the focal stack associated to the object of interest is high, which will provide more information to the user, when he/she wants to refocus the scene on this peculiar object of interest. The object the user is interested in will be more precisely identified, which will increase the accurateness of the user profile in which it is recorded.

According to embodiments of the present disclosure, objects of interest 401 and 402 may be:

- a salient object (as described for example in **"Saliency Detection on Light Field" by Nianyi Li, Jinwei Ye, Yu Ji, Haibin Ling, and Jingyi Yu);**
- a face, or part or whole of a human body, detected in the scene;

- a foreground object (identified for example via disparity estimation, as described in **ICCP2014, "Accurate Disparity Estimation for Plenoptic Images" by N. Sabater, V. Drazic, M. Seifi, G. Sandri and P. Perez**);
- an object selected by a user (for example, an object manually selected by a user on a certain frame and tracked along a video sequence).

In the same scene, one or several objects of interest can be detected. The sampling in z for the focal stack will adapt to as many objects of interest as detected in the scene.

In this peculiar embodiment, processor 61 of apparatus 60 or processor 71 of apparatus 70 may further comprise a set of units and modules for embodying the functions of computing an adaptive focal stack as a function of the layout of the scene, and notably:

- an adjusting module for reducing or increasing the sampling interval according to the layout of the scene;
- a module for determining the focal stack as the set of consecutive focused images spaced an adjusted sampling interval apart from each other;
- a module for identifying objects of interest in the scene;
- a module for assessing the depth of objects of interest;
- a module for determining the number of focused images to be associated to each object of interest;
- a disparity estimation module for estimating disparities from the light field data set or from a matrix of views generated from the light field data set;
- a computing unit for computing the position of objects of interest in the scene from the estimated disparities.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit", "module", or "system".

When the present principles are implemented by one or several hardware components, it can be noted that a hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas) which receive or transmit radio signals. In one embodiment, the hardware component is compliant with one or more standards such as ISO/IEC 18092 / ECMA-340, ISO/IEC 21481 / ECMA-352, GSMA, StoLPaN, ETSI / SCP (Smart Card Platform), GlobalPlatform (i.e. a secure element). In a variant, the hardware component is a Radiofrequency identification (RFID) tag. In one embodiment, a hardware component comprises circuits that enable Bluetooth communications, and/or Wi-fi communications, and/or Zigbee communications, and/or USB communications and/or Firewire communications and/or NFC (for Near Field) communications.

Furthermore, aspects of the present principles can take the form of a computer readable storage medium. Any combination of one or more computer readable storage medium(s) may be utilized.

Thus for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo code, and the like represent various processes which may be substantially represented in computer readable storage media and so executed by a computer or a processor, whether or not such computer or processor is explicitly shown.

Although the present disclosure has been described with reference to one or more examples, workers skilled in the art will recognize that changes may be made in form and detail without departing from the scope of the disclosure and/or the appended claims.

**Claims**

1. Method for collecting information on users of light field data, wherein it comprises:

   - receiving (S505) at least one Light Field viewing parameter (19; 503) used for determining an image visualized by a user from light field data (805), along with an identifier (502) of said user;
   - storing (S506) said at least one Light Field viewing parameter (503), along with an identifier of said light field data (504), in a user profile associated to said user's identifier.

2. The method of claim 1, wherein it also comprises analyzing (S509) said light field data as a function of said at least one Light Field viewing parameter (503) and of a light field acquisition device model (m), and determining (S510) at least one object in focus and/or at least one object not in focus in said visualized image as a result of said analyzing.

3. The method of claim 2, wherein it also comprises storing an identifier of said at least one object in focus and/or of said at least one object not in focus in said user profile.

4. The method of any preceding claim, wherein it also comprises gathering (S511) in a category profile at least two user profiles showing at least one similarity criteria.

5. The method of any preceding claim, wherein said image is part of a video, and wherein said at least one Light Field viewing parameter is a time dependent parameter.

6. The method of any preceding claim, wherein said at least one Light Field viewing parameter belongs to the group comprising:

   - a viewpoint parameter;
   - a refocusing parameter;
   - a field of view parameter;
   - a visual effect parameter;
   - a depth of field parameter.

7. Method for providing information on a user of light field data, comprising receiving (S801) light field data (805) and determining (S803) at least one image from said light field data, as a function of at least one Light Field viewing parameter (503), wherein it comprises sending (S804) said at least one Light Field viewing parameter along with an identifier (502) of said user to at least one collecting service.

8. The method of claim 7, wherein said at least one Light Field viewing parameter results of user interaction with at least one device used for visualizing said image.

9. The method of claim 7 or 8, wherein said at least one image is part of a video and wherein said at least one Light Field viewing parameter is a time dependent parameter.

10. The method of claims 7 to 9, wherein said at least one Light Field viewing parameter is sent along with a light field acquisition device model or with an identifier of said light field acquisition device model.

11. The method of any preceding claim, wherein said at least one Light Field viewing parameter belongs to the group comprising:

   - a viewpoint parameter;
   - a refocusing parameter;
   - a field of view parameter;
   - a visual effect parameter;
   - a depth of field parameter.

12. Apparatus for collecting information on users of light field data, wherein it comprises:

   - a receiving unit (45) for receiving at least one Light Field viewing parameter (503) used for determining an image visualized by a user from light field data, along with an identifier of said user (502);
   - a storage unit (42) for storing said at least one Light Field viewing parameter (503), along with an identifier of said light field data (504), in a user profile associated to said user's identifier.

13. A display device for displaying at least one image determined from light field data, as a function of at least one Light Field viewing parameter, wherein it comprises a sending unit (65; 75) for sending said at least one Light Field viewing parameter (503) along with an identifier of said user (502) to at least one collecting service.

**14.** A home network device connected to at least one display device for displaying at least one image determined from light field data, as a function of at least one Light Field viewing parameter (503), wherein it comprises:

- a receiving module for receiving said at least one Light Field viewing parameter from said at least one display device;
- a sending module for sending said received Light Field viewing parameter along with an identifier of said user to at least one collecting service.

**15.** A computer program product downloadable from a communication network and/or recorded on a medium readable by a computer and/or executable by a processor, comprising program code instructions for implementing a method according to any one of claims 1 to 6.

**16.** A non-transitory computer-readable medium comprising a computer program product recorded thereon and capable of being run by a processor, including program code instructions for implementing a method according to any one of claims 1 to 6.

**17.** A computer program product downloadable from a communication network and/or recorded on a medium readable by a computer and/or executable by a processor, comprising program code instructions for implementing a method according to any one of claims 7 to 11.

**18.** A non-transitory computer-readable medium comprising a computer program product recorded thereon and capable of being run by a processor, including program code instructions for implementing a method according to any one of claims 7 to 11.

15

*4D
light-field
content* 14

15

*Processing
unit* 10

0

16

19

17 18

13

*TV*

18 12

17

18

17

11

*User 2 / Display 2*

*User 3 / Display 3*

*User 1 / Display 1*

<u>Fig. 1</u>

20

*Light-Field Capture*

Image 1:
Parameters =
$(a_1, b_1, c_1, d_1, ...)$

Image 2:
Parameters =
$(a_2, b_2, c_2, d_2, ...)$

*Rendering & Re-focus from LF*

<u>Fig. 2</u>

Foreground 33

Background 34

Camera 31

$x$

Virtual camera

Camera 32

Fig. 3

41 42 40 45

Processor

Storage Unit

Interface Unit

To external Apparatus

Input Device

Output Device

46

43 44

Fig. 4

S500 — INIT

S501 — CREATE PROFILE ← USER ID — 502

S505 — RECEIVE ← USER ID — 502
← (m,a,b,c,d,…) — 503
← 4D Light Field — 504

STORE IN PROFILE — S506

RETRIEVE CAMERA MODEL ← m — DB — 508
S507

ANALYZE — S509

IDENTIFY OBJECTS OF INTEREST — S510

TAG PROFILE — S511

END — S512

Fig. 5

Processor — 61
Storage Unit — 62
Interface Unit — 65 — To external Apparatus — 60

Sensor — 67
Input Device — 63
Output Device — 64

66

Fig. 6

Fig. 7

Fig. 8

camera

400

401

402

d1

d2

Focal
stack

500

Closest
focal
distance

501

502

Farest
focal
distance

Fig. 9

500

502

501

Fig. 10

Europäisches
Patentamt

European
Patent Office

Office européen
des brevets

## EUROPEAN SEARCH REPORT

Application Number

EP 15 30 5823

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/287233 A1 (WANG HAOHONG [US] ET AL) 15 November 2012 (2012-11-15) * paragraphs [0051] - [0052], [0054], [0061] - [0066] * | 1,4-9, 11-18 | INV. H04N21/258 H04N21/6587 H04N21/81 H04N21/234 H04N5/225 H04N21/442 |
| A | US 2014/177905 A1 (GREFALDA MELVIN [US] ET AL) 26 June 2014 (2014-06-26) * paragraphs [0022], [0026], [0027], [0030], [0032] - [0034], [0039], [0041], [0043], [0048] - [0050], [0079] - [0083], [0090] - [0101], [0120]; figures 1A, 1B,5,6,7,8 * | 1-18 | |
| A | US 2014/146148 A1 (MACIOCCI GIULIANO [GB]) 29 May 2014 (2014-05-29) * paragraphs [0021] - [0026]; figures 2,3 * | 1-18 | |
| A | US 2012/249550 A1 (AKELEY KURT BARTON [US] ET AL) 4 October 2012 (2012-10-04) * the whole document * | 1-18 | |

TECHNICAL FIELDS
SEARCHED      (IPC)

H04N

The present search report has been drawn up for all claims

| Place of search | Date of completion of the search | Examiner |
|---|---|---|
| Munich | 24 August 2015 | Seeger, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 30 5823

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2015

| Patent document cited in search report | Publication date | Patent family member(s) | Publication date |
|---|---|---|---|
| US 2012287233 A1 | 15-11-2012 | EP 2520096 A1<br>US 2012287233 A1<br>WO 2011081623 A1 | 07-11-2012<br>15-11-2012<br>07-07-2011 |
| US 2014177905 A1 | 26-06-2014 | NONE | |
| US 2014146148 A1 | 29-05-2014 | CN 104798370 A<br>US 2014146148 A1<br>WO 2014085092 A1 | 22-07-2015<br>29-05-2014<br>05-06-2014 |
| US 2012249550 A1 | 04-10-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130222633 A

### Non-patent literature cited in the description

- **REN NG.** PhD dissertation thesis. July 2006
- **S. WANNER et al.** Generating EPI Representation of a 4D Light Fields with a Single Lens Focused Plenoptic Camera. *conference proceedings of ISVC,* 2011
- **MARC LEVOY.** Light fields and computational imaging. *IEEE Computer,* 2006, vol. 39 (8), 46-55
- **NG REN et al.** Light field photography with a hand-held plenoptic camera. *Computer Science Technical Report CSTR 2,* 2005
- **NG.** Light field photography with a handheld plenoptic camera. *Computer Science Technical Report CSTR 2,* 2005